# EUROPEAN PATENT SPECIFICATION

(11) **EP 0 337 559 B1**
(45) Date of publication and mention of the grant of the patent: **22.06.1994**
(21) Application number: 89200878.0
(22) Date of filing: 07.04.1989
(51) Int. Cl.: A01D 78/10

(54) **An agricultural machine**
Landwirtschaftliche Maschine
Machine agricole

(30) Priority: 12.04.1988 NL 8800942
(43) Date of publication of application: 18.10.1989
(73) Proprietor: C. van der Lely N.V., NL-3155 PD Maasland (NL)
(72) Inventor: Van der Lely, Edwin, Maasland (NL); Bom, Cornelis Johannes Gerardus, Rozenburg (NL)
(74) Representative: Mulder, Herman

(56) References cited:
- EP-A- 0 217 436
- EP-A- 0 290 059
- DE-A- 1 507 287
- DE-A- 1 507 329
- DE-A- 1 582 167
- DE-A- 1 582 291
- DE-A- 2 832 425
- DE-B- 2 127 701
- FR-A- 2 379 244
- GB-A- 1 151 647
- NL-A- 291 377
- NL-A- 291 449
- NL-A- 6 602 079
- US-A- 3 910 019

## Description

The invention concerns an agricultural machine which comprises working members supported by supporting members during normal operation, which working members are attached to a three-point trestle by means of arms which are coupled by pivotal connections to the trestle and which are arranged pivotably parallel to a substantially horizontal plane relative to the trestle around said connections for adjusting the position of the working members with respect to the trestle, the arms being further pivotably interconnected by means of a first connecting element, the pivotal connections on the trestle as well as the pivotable connections between said first connecting element and the arms constituting the corner points of a polygon providing an instantaneous pivot axis.

Such a machine, designed as a haymaking machine, is known from EP-A-0217436. The working members of this machine may be adjusted such that by swinging the arms, which are in a fixed position during working, about their pivot and by fixing the arms, the position of the working members with respect to the trestle and hence to the tractor can be changed to obtain a desired fixed working position.

The invention has as a purpose a machine, wherein the dynamic behaviour during operation can be improved, in particular a machine wherein the swaying movements of the machine relative to the tractor can be suppressed to a large extent.

According to the invention, said polygon is deformable during operation, the two working members (14, 15) being pivotable about the instantaneous pivot axis (37) which, taken relative to the direction of operative travel, is located in front of the trestle such that they are to pivot laterally during operation in the same direction relative to the trestle (1) so as to obtain different positions with respect to the trestle (1) during operation, a second connecting element (25) being provided which is rigidly arranged relative to the carriers (33) and which, upon adjustment of the distance between the working members (14, 15), effect a fixed position of the ground wheels (31, 32) relative to a connecting line between corresponding points of upright extending carriers (33) of the said ground wheels.

It is remarked that from NL-A-8601486 and DE-A-1582291 agricultural machines are known with arms which are pivotable for adjusting the working width of the machine; both machines behave, during operation, like machines which are rigidly attached to the tractor.

For a better understanding of the invention and to show how the same may be carried into effect, reference will now be made, by way of example, to the accompanying drawings, wherein:
Figure 1 is a plan view of an agricultural machine connected to a tractor, in this case a rotary haymaking machine, constructed according to the invention;
Figure 2 is a sectional view taken on the line II - II in Figure 1;
Figure 3 is a plan view of a machine according to the invention during operation, a minimum spacing having been set between the working members;
Figure 4 shows the machine of Figure 3 in a position wherein the major part of the machine is deflected relative to the normal working position, and
Figure 5 is a plan view of a transmission driving the working members in a further embodiment of the machine.

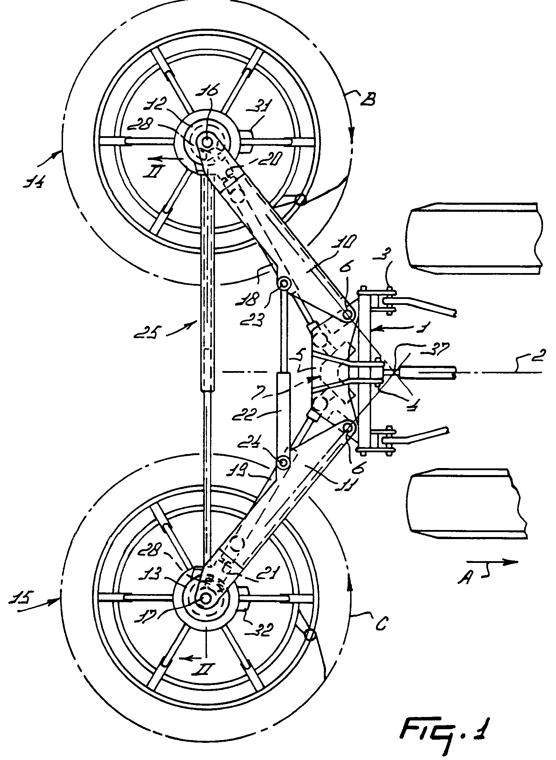

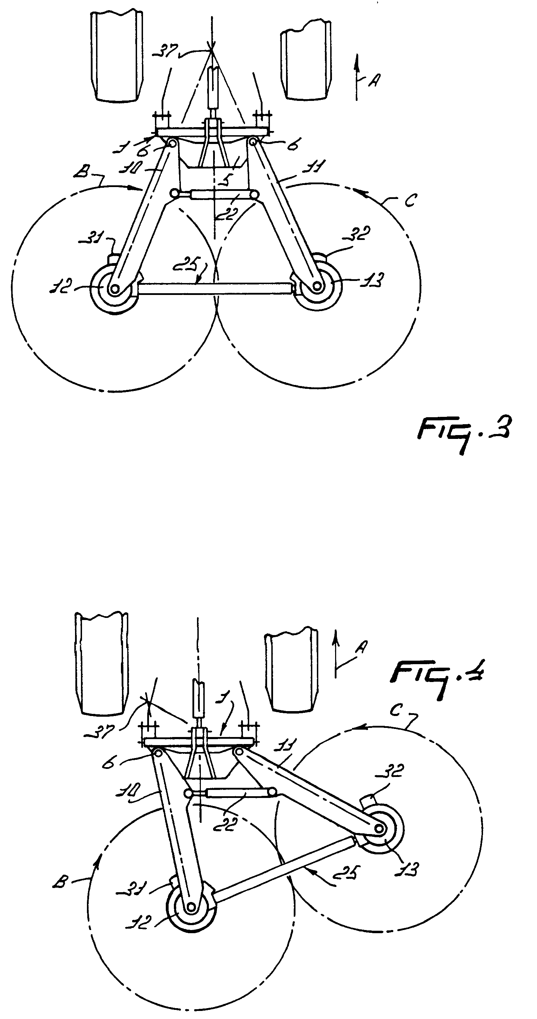

The agricultural machine shown in Figure 1, in this case a haymaking machine suitable for tedding crop, has a trestle 1 in the shape of an inverted U, which is intended for the attachment of the machine to a tractor and, during operation, is arranged approximately parallel to a plane extending perpendicularly to the vertical longitudinal symmetry plane 2 of the tractor. Near its outermost and bottommost ends, the trestle 1 is provided with connecting points 3 for the connection to the lower lifting arms of the lifting hitch of the tractor, as well as with an upper connecting point 4 for connecting the trestle, and hence the machine, to the top link of this lifting hitch. To the two downwardly directed legs of the U-shaped trestle 1 there are connected two superjacent, mutually parallel, approximately horizontal plates 5 which, seen in a plan view, extend rearwardly from the trestle 1 (Fig. 5).

Near the most outwardly located portions of the plates 5, so also near the downwardly directed legs of the trestle 1 there are arranged mutually parallel, approximately vertical pivot pins 6 which project to above the upper plate 5 and extend to below the lower plate 5. The pivot pins 6 are arranged symmetrically relative to the symmetry plane 2.

Between the two plates 5 there is disposed a transmission box, in this case a gear box 7, which is shown only schematically in Figure 1. The gear box 7 includes an input drive shaft (not shown) which projects therefrom towards the tractor and can be coupled in a known per se manner to the power take-off shaft of the tractor via an intermediate shaft. The gear box 7 has two output shafts 8 and 9, respectively, which project rearwardly from the gear box 7 relative to the direction of operative travel A and, in this direction, are arranged mutually diverging and symmetrically relative to the symmetry plane 2.

About each of the two pivot pins 6 there is arranged the leading end of a carrier arm 10 and 11, respectively, which carrier arms extend rearwardly as well as outwardly from the associated pivot pins 6, so that, taken in a direction opposite to the direction of operative travel A, the two arms 10 and 11 are mutually diverging. The rearmost end of each of the arms 10 and 11, respectively, is fitted with a gear box 12 and 13, respectively, which gear boxes have for their object to drive the respective working members 14 and 15, in the form of rake members. During operation, the rake members 14 and 15 are drivable about upwardly extending, slightly forwardly inclined and mutually parallel axes of rotation 16 and 17, respectively.

The output shafts 8 and 9, respectively, of the gear box 7 are coupled via respective drive shafts 18 and 19 to the input shafts 20 and 21, respectively, of the respective gear boxes 12 and 13 of the rake members 14 and 15, respectively. Each of the drive shafts 18 and 19 comprises two universal joints (preferably dual universal joints) and is of a telescopic structure.

Each of the respective carrier arms 10 and 11 is made of plate material which is folded such that each of these arms has a U-shaped cross-section. The legs of this U are arranged approximately horizontally and the open side of this U is directed towards the symmetry plane 2. The respective drive shafts 18 and 19 are arranged such that they are located at least partly inside the U-shaped carrier arms 10 and 11, respectively, so that, during operation, these carrier arms prevent the possibility of persons coming into contact with the drive shafts 18 and 19.

The drive inside the gear box 7 and that inside the two gear boxes 12 and 13 is such that the rake members 14 and 15 are drivable in the respective directions of rotation B and C, as is shown by means of arrows in Figure 1.

The two carrier arms 10 and 11 are interconnected by means of a first connecting element in the form of a hydraulic cylinder 22. The piston rod of the cylinder 22 and the cylinder itself are connected to the respective carrier arms 10 and 11 by means of pivot pins 23 and 24, respectively, which extend parallel to the pivot pins 6. The spacing between the pivot pins 23 and 24, respectively, and the nearby pivot pin 6 is approximately 25 to 50% of the operative length of the relevant carrier arms 10 and 11, respectively, and is the same for each of the two carrier arms.

As is apparent from Figure 2, the gear boxes 12 and 13 are interconnected by a second connecting element 25, in this case a connecting pipe, whose length is variable. The second connecting element 25 comprises two telescopically slidable pipes, the pipe of the smallest diameter being slidable over part of its length with a tight fit inside the other pipe. The outer ends of the two pipes, which together constitute the connecting element 25, are rigidly fastened to the respective gear boxes 12 and 13 by means of bolts, so that the distance between these two gear boxes can be varied, but not their relative position. Seen in plan view, the connecting element, whatever its design, must preserve its shape (in this case a straight shape) on adjustment of the mutual spacing between the gear boxes 12 and 13.

As is apparent from Figure 2, the plate-shaped carrier arm 11 is connected pivotably relative to the gear box 13 by means of extension members 26 and 27 mounted on the gear box 13, the arrangement being such that, relative to the carrier arm 11, the gear box 13 is pivotal about a centre line which coincides with the axis of rotation 17 of the rake member 15. Inside the gear box 13, a gear wheel 29 has its bottom side rigidly connected to a hub 30 to which is attached the carrier member of the (non-shown) tines of the rake member 15. The gear wheel 29 is driven by a gear wheel 28 (Figure 1) which is outside the sectional view shown in Figure 2 and is drivable via the input shaft 21, the drive shaft 19 and the gear box 7.

Each of the two rake members 14 and 15 is supported by a ground wheel 31 and 32, respectively. The rotary shafts of the respective ground wheels 31 and 32 are rigidly connected to wheel carriers 33 whose upper portions, which are positioned co-axially around the respective axes of rotation 16 and 17, are enclosed by the hub 30. As is apparent from Figure 2, the gear wheel 29 is supported around the wheel carrier 33 which is mounted rigidly relative to the gear box 13. To that end, the wheel carrier 33 projects to above the upper side of the gear wheel 29 and is connected rigidly to an upper cover of the gear box. The gear box 12 is of an identical construction.

The wheel carrier 33 and hence the ground wheel 32 are therefore in a fixed position relative to the gear box 13 and also relative to the direction of the connecting element 25, since the pipe section facing the gear box 13 and constituting part of the connecting element 25 is rigidly connected to the gear box 13. In the embodiment, the axle of the ground wheel 32 runs parallel to the connecting element 25.

For the other ground wheel 31 a similar connecting construction is used, the arrangement being such that the ground wheel 31 is directed parallel to a plane perpendicular to the direction of the connecting element 25.

Consequently, the ground wheels 31 and 32 are interconnected in such a manner that they are in a fixed position relative to the connecting pipe or the connecting element 25 interconnecting the two gear boxes 12 and 13. Generally, it can be said that the ground wheels occupy a fixed position relative to a horizontal connecting line between corresponding points of the centre lines of the carriers 33 of the supporting members 31 and 32. As has been described in the foregoing, this connecting line may be constituted by the centre lines of the telescopically sliding pipes of the second connecting element 25.

Since on adjustment of the said mutual distance not only the ground wheels but also the gear boxes 12, 13 retain their position relative to the direction of operative travel, the lowest points of the tine paths of the rake members 14 and 15 remain straightly in front of the associated axis of rotation, so that two effects are obtained simultaneously.

In the foregoing there has been question of two ground wheels 31 and 32 for the machine shown in the embodiment; this description may, however, also relate to other types of supporting members for a machine, such as supporting shoes.

In an alternative embodiment, the wheel carriers 33 of the ground wheels 31 and 32 may project to above the gear boxes, which projecting ends are coupled directly by approximately horizontal pipe sections which are telescopically slidable and which are rigidly connected to these carriers. In that case the gear boxes 12, 13 (when they are rigidly connected to the carrier arms 10, 11) are pivoted indeed by the carrier arms 10, 11 relative to the direction of operative travel on adjustment of their mutual spacing.

When coupled to the lifting hitch of a tractor by means of the connecting points 3 and 4, the machine in accordance with the embodiment shown in Figures 1 and 2 can be driven from the power take-off shaft of the tractor by an intermediate shaft which is connected to the input shaft of the gear box 7. The output shafts 8 and 9 of the gear box 7 drive via the respective drive shafts 18 and 19 the input shafts 20 and 21, respectively, of the respective gear boxes 12 and 13 of the respective rake members 14 and 15 into the direction of rotation B and C, respectively. The rake members 14 and 15 displace crop lying on the field towards the rear between themselves and distribute it over the field. Consequently, the machine acts as a tedder.

The double-acting hydraulic cylinder 22 is coupled hydraulically to the hydraulic system of the tractor. A control member for operating the cylinder 22 is positioned near the driver's seat of the tractor. Consequently, it is possible to operate the hydraulic cylinder 22 during travel over the field. This provides the possibility of changing the mutual distance between the rake members 14 and 15 during operation. In the position shown in Figure 1, the mutual spacing between the rake members 14 and 15 is at its maximum and corresponds to the largest working width of the machine. The smallest relative spacing between the rake members 14 and 15 is shown in Figure 3, wherein the tine paths of the rake members 14 and 15 are overlapping; consequently, the length of the hydraulic cylinder is then at its minimum.

In spite of the fact that the relative spacing between the rake members 14 and 15 can be varied randomly within certain limits during operation, the ground wheels 31 and 32 automatically continue to occupy a fixed position relative to a connecting line between the centre lines of the wheel carriers 33 whose mutual distance varies. Consequently, the position of the ground wheels 31 and 32 is independent of the angle between the directions of the carrier arms 10 and 11, in contradistinction to the prior art constructions in which a ground wheel adjustment must be effected manually for each change of the mutual distance of frame portions, or directions of frame portions.

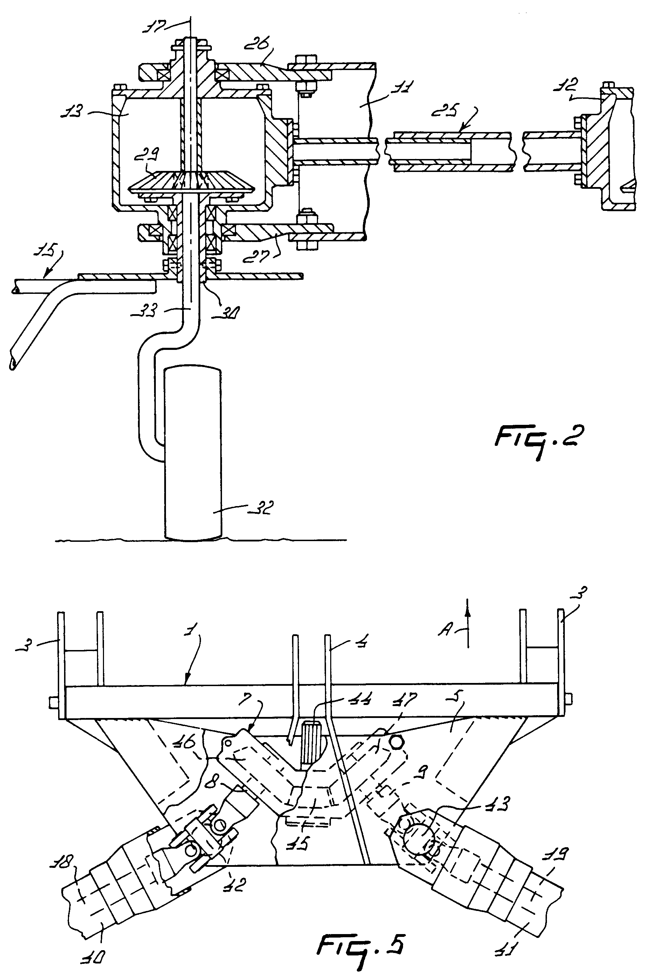

When, during travel over uneven fields, the machine shown in Figure 1 starts swaying laterally with respect to the tractor (see Figure 4, in which an instantaneous view of such a swaying movement is shown), the ground wheels 31 and 32 continue to enclose an angle with the direction of operative travel A during the major portion of such a swaying movement, so that the ground wheels are subjected to lateral forces from the ground, which lateral forces act in the opposite direction to the unwanted deflection of the machine due to the swaying movement. Consequently, the ground wheels 31 and 32 contribute towards the suppression of the swaying movements, independently of the relative position of the rake members 14 and 15. Therefore, intercoupling of the ground wheels of two rake members, as shown in Figure 2, renders it possible to utilize the forces to which the ground wheels are subjected to suppress the swaying of machines, of which the mutual spacing between frame portions supporting ground wheels is adjustable during operation. In the case of machines having a mutual spacing between frame portions which is adjustable during operation, freely pivotal ground wheels would have to be employed, but such wheels cannot contribute towards the suppression of swaying movements, this in contradistinction to the inventive idea described here.

As is apparent from Figure 1, the extension of the connecting line between the axis of rotation 16 or the centre line of the one wheel carrier 33 and the nearby pivot pin 6 on the one hand, and that of the connecting line between the axis of rotation 17 or the centre line of the other wheel carrier 33 and the nearby pivot pin 6 on the other hand, intersect in a point 37 which, taken in the direction of operative travel A, is located at a slight distance in front of the connection of the machine to the tractor, in this case in a machine position wherein the largest distance between the rake members 14 and 15 has been set. When the machine has been adjusted such that the spacing between the rake members is at its smallest (see Figure 3), the extensions of the said connecting lines intersect in a point 37 which, taken relative to the direction of operative travel A, is located at a considerable distance in front of the connection of the machine to the lifting hitch of the tractor. In both cases, the machine pivots about the instantaneous pivot axis 37 when lateral deflections occur due to the irregularities in the ground, crop forces etc. The significance of the instantaneous pivot axis 37 is that, at a very small deflection from the intermediate position shown in Figure 3, the machine pivots about this approximately vertical shaft. Due to such a small deflection, the instantaneous pivot axis 37 has moved from the symmetry plane, then an instantaneous pivot axis is formed for a subsequent small deflection, etc. After having passed through a relatively large deflection, the position of the pivot axis 37 is as shown in Figure 4. Consequently, the pivot axis 37 moves relative to the machine as well as to the tractor.

In contradistinction to what has been described in the foregoing, in prior art machines the machine is pivotal about a real pivot shaft which, taken in the direction of operative travel A, is located behind the connection of the machine to the tractor, usually behind the three-point trestle.

Since, seen in plan view, the instantaneous pivot axis 37 moves from the symmetry plane 2 of the tractor in a direction opposite to that wherein the centre of gravity of the machine is moved during swaying (Figure 4) and the distance from the instantaneous pivot axis 37 to the centre of gravity of the machine is considerably larger than in the case of the afore-mentioned prior art machine, the relatively large, ground-induced moments then occurring return the machine to the intermediate position already after a slight deflection. These moments are less for said prior art machines, as the moment arms are smaller. Since the said moments return the machine, as shown in Figures 1, 3 and 4, in an operative manner already at slight deflections from the intermediate position, there occur only relatively small mass forces acting on the instantaneous pivot axis 37, so that the tendency of swinging to the other side after having reached the intermediate position is virtually absent.

Based on the same lateral displacement from the intermediate position of the machine according to the invention and of the prior art machine, the directions of the ground wheels 31, 32 of the machine of the invention, which wheels are in a fixed position relative to the frame, enclose a smaller angle with the direction of operative travel than those of the prior art machine. The machine in accordance with the invention will return to the intermediate position with a lower angular velocity and will almost have no tendency of swinging to the other side.

The fact that in the machine according to the invention the ground wheels 31 and 32, also for a machine comprising working members whose mutual spacing is adjustable during operation, can be coupled such that on lateral deflections of the machine they can assume a fixed position relative to a connecting line between the carriers of the supporting members, effects that also for this type having mutually adjustable working members the ground wheels can be utilized to damp the swaying movements of the machine relative to the tractor. This effect provided by the ground wheels in a machine with adjustable working members can co-operate with the above-mentioned position of the instantaneous pivot axis 37, i.e. a position in front of the coupling points of the machine to the tractor, in order to suppress swaying of the machine behind the tractor, both during operation and when curves are driven at high speed. In addition to their function of adjusting the distance between the rake members 14 and 15, the carrier arms 10 and 11 also effect the function of lateral floating device whereby in curves the machine is driven pivotably behind the tractor; consequently, a separate lateral floating device is superfluous. In the construction shown, the two pivot pins 6 and the pivot pins 23 and 24 constitute the corner points of a quadrangle which is deformable during operation (Figure 4).

As regards the embodiment of the machine shown in Figure 1, it should be noted that, because of the fact that the carrier arms 10 and 11 are arranged capably of pivoting about pivot pins 6 independently of the drive shafts 18 and 19, it is possible to position these pivot pins, taken in the direction of operative travel, as far as possible on both sides of the symmetry plane 2 of the tractor and, taken in the direction of operative travel A and relative to the trestle 1, at the same time as far as possible up front. Hereby it is possible to achieve that the instanteneous pivot axis 37 is in a position as far as possible in front of the connection of the machine to the tractor, as a result of which, as has been described in the foregoing, there can be obtained an optimum damping of swaying movements by the ground wheels 31, 32 as well as a forward positioning of the centre of gravity of the machine, which further adds to this damping effect. Since the output shafts 8 and 9 of the gear box 7 are limited by the dimensions of this gear box, the above achieves, with a view to the dynamic behaviour of the machine behind the tractor, that as regards the position of the instantaneous pivot axis 37 the position of the output shafts 8, 9 which will be located at a relatively short distance from the plane 2 is not a limiting factor, unless a very wide and consequently complicated and expensive gear box 7 is acceptable.

Figure 5 shows an embodiment in which, contrary to the preceding paragraph, the carrier arms of the working members 14 and 15 are not arranged pivotably independently of the position of the output shafts 8 and 9 of the gear box 7, but in which these carrier arms (which in Figure 5 are given the reference numerals 40 and 41) are provided pivotably around upwardly directed hinge pins or pivot pins 42 and 43, respectively, which coincide with the midway points of the dual universal joints of the respective drive shafts 18 and 19, located near the gear box 7. The centre lines of the drive shafts 18 and 19 approximately coincide with those of the carrier arm 40 and 41, respectively, which carrier arms enclose the drive shafts. Consequently, in Figure 5 the carrier arms 40 and 41 are substituted for the carrier arms 10 and 11 of Figure 1 and constitute in an analogous manner a lateral floating device.

The gear box 7 has an input shaft 44 which can be coupled to the power take-off shaft of the tractor via an intermediate shaft. The portion of the input shaft 44 that is located inside the box 7 itself is fitted with a bevel gear wheel 45 which is in driving connection with two bevel gear wheels 46 and 47, respectively. The rotary shafts of the gear wheels 46 and 47, together with the rotary shaft of the gear wheel 45 and that of the input shaft 41 are in approximately the same, substantially horizontal plane which extends approximately parallel to the plates 5. The rotary shafts of the gear wheels 46 and 47 also constitute the output shafts 8 and 9 which project rearwardly from the box 7. The gear wheel 45 drives the gear wheel 47 via a (non-shown) intermediate gear wheel which meshes with the gear wheels 45 and 47 and is located below the gear wheels 45 and 47 and is also supported in the gear box 7 (Figure 5). This intermediate gear wheel has for its object to provide the desired sense of rotation B and C, respectively, as shown in Figure 1.

The gear wheels 46 and 47 are arranged such relative to the gear wheel 45 that, seen in the plan view of Figure 5, they extend obliquely forwardly and outwardly. The centre lines of the rotary shafts of the gear wheels 46 and 47 intersect the centre line of the input shaft 44 in approximately one point; taken from this point of intersection and taken relative to the direction of operative travel A, the centre lines of the gear wheels 46 and 47 diverge rearwardly and approximately symmetrically with respect to the centre line of the input shaft 44. The angle between each of the rotary shafts of the respective gear wheels 46 and 47 and the rotary axis of the input shaft 44 is approximately 45° in the embodiment shown in Figure 5, but this angle may alternatively be slightly less or more.

From the plan view of Figure 5 it is apparent that, taken in a direction perpendicular to the direction of the input shaft, the portion of the input shaft 44 that projects from the gear box 7 is positioned at least partly beside at least one of the gear wheels 46 and 47, beside both these gear wheels in the present case. In a different embodiment, the gear wheels 46 and 47 may alternatively be disposed e.g. above or below the input shaft portion projecting from the gear box. As is apparent from Figure 5, part of the portion of the input shaft that projects from the gear box is disposed beside a portion of one or more output shafts, taken in a direction perpendicular to the direction of the input shaft 44.

Therefore, as is shown in Figure 5, the gear box 7 itself is in the shape of a V, whose open end points forwards.

Because of the described design of gear box 7, those portions of the output shafts 8 and 9 that project from the gear box are advanced, as compared with known embodiments of gear boxes, relative to that portion of the input shaft 44 that projects from the gear box, taken in the direction of operative travel A. This implies that the foremost connection points of the carrier arms 40 and 41 carrying the working members 14 and 15 (in the embodiment also the pivot pins of these carrier arms) can also be moved forwards through the same distance. The length of the carrier arms 40 and 41 being the same, the centre of gravity of the machine is also advanced through approximately the same distance, taken in the direction of operative travel A. In practice this distance is approximately 10 to 20 cms.

As regards these considerations, it should be noted that the distance between the foremost point of the input shaft 44 to the power take-off shaft of the tractor cannot be reduced unlimitedly, because an adequate operation of the intermediate shaft coupling these shafts requires a given length in connection with the angles which will occur between the input shaft 44 and the power take-off shaft of the tractor on the one hand and the intermediate shaft on the other hand during operation and during lifting of the machine. Consequently, the foremost point of the input shaft 44 relative to the connecting points 3 and 4 of the machine is determined on the basis of the length required for the intermediate shaft. Consequently, in accordance with the feature of the invention shown in Figure 5, the resultant forward shift of the centre of gravity of the machine relative to the connection of the machine to the tractor is obtained almost exclusively as a result of the design of the gear box 7, in which connection at least part of the input shaft 44 is arranged between the foremost boundaries of the gear box itself, or at least one boundary wall of a transmission box for the drive of working members is in a position relative to the direction of the input shaft beside at least part of the input shaft projecting from this gear box. This also holds for a transmission box having pulleys or chain wheels.

The above can be summarized as follows.

The dynamic behaviour of an agricultural machine relative to a tractor hauling same can be improved, in particular the occurrence of swaying movements of the machine relative to the tractor can be suppressed, in case of a machine whose mutual spacing between the working members is adjustable, by intercoupling the ground wheels supporting the machine such that the position of these ground wheels with respect to a connecting line between the centre lines of the ground wheel carriers remains the same for different mutual spacings between these working members.

The said dynamic behaviour can also be improved by positioning the connections of the carrier arms carrying the working members to a connecting structure for connection of the machine to a tractor, independently of the drive arrangement, such that, taken relative to the direction of operative travel, an instantaneous pivot axis of at least part of the machine is obtained which is positioned as far as possible in front of the connection of the machine to the tractor.

Because of said last measure, it can also be achieved that the centre of gravity of the machine is moved nearer to the connection of the machine to the tractor, as a result of which the damping, initiated by supporting members of the machine at the occurrence of swaying movements, is also improved when the afore-mentioned measure is used. Additionally, the machine can be lifted by a less heavy tractor.

The dynamic behaviour of an agricultural machine connected to the rear of a tractor can also be improved by designing a transmission box which provides the drive of the working members of the machine and has an input shaft which can be coupled to the power take-off shaft of the tractor in such a manner that, taken in a direction perpendicular to that of the input shaft, at least part of the portion of the input shaft that projects from the transmission box boundary wall is arranged beside at least one of the transmission wheels, or that at least part of the portion of the input shaft that projects from the gear box boundary wall is arranged beside a portion of this gear box boundary. This provides the possibility of advancing, taken in the direction of operative travel, at least one output shaft of the transmission box to a greater extent than for a known transmission box having an input shaft. In this case it is also possible to advance the centre of gravity of the entire machine to a greater extent, taken in the direction of operative travel, than for a known transmission box. Acting thus, the dynamic behaviour of the machine relative to the tractor is also improved, in particular at the occurrence of swaying movements, because, due to the fact that the centre of gravity of the machine is positioned nearer to the connection to the tractor, there is produced a smaller mass inertia moment, which also results in a greater damping of these swaying movements. This measure can be used in machines having an adjustable or a fixed mutual distance between the working members, and also in machines which are connected to the three-point lifting hitch of the tractor and have a lateral floating device, but also in machines which are connected to the tractor via only one upwardly directed pivot shaft. Also in this case, a less heavy tractor can be used for lifting the machine.

The above-described features according to the invention can each be used individually or in combination not only with a haymaking machine as described hereinbefore, but also with machines of other types, such as fertilizer spreaders, spraying machines and the like.

## Claims

1. An agricultural machine which comprises working members (14, 15) supported by supporting members (31, 32) during normal operation, which working members (14, 15) are attached to a three-point trestle (1) by means of arms (10, 11; 40, 41) which are coupled by pivotal connections (6; 42, 43) to the trestle (1) and which are arranged pivotably parallel to a substantially horizontal plane relative to the trestle around said connections for adjusting the position of the working members (14, 15) with respect to the trestle, the arms (10, 11; 40, 41) being further pivotably interconnected by means of a first connecting element (22), the pivotal connections (6; 42, 43) on the trestle (1) as well as the pivotable connections (23, 24) between said first connecting element (22) and the arms (10, 11; 40, 41) constituting the corner points of a polygon providing an instantaneous pivot axis (37), characterized in that said polygon is deformable during operation, the two working members (14, 15) being pivotable about the instantaneous pivot axis (37) which, taken relative to the direction of operative travel, is located in front of the trestle such that they are to pivot laterally during operation in the same direction relative to the trestle (1) so as to obtain different positions with respect to the trestle (1) during operation and a second connecting element (25) being provided which is rigidly arranged relative to the carriers (33) and which, upon adjustment of the distance between the working members (14, 15) effects a fixed position of the ground wheels (31, 32) relative to a connecting line between corresponding points of upright extending carriers (33) of the said ground wheels.

2. An agricultural machine as claimed in claim 1, characterized in that the second connecting element (25) is connected directly to the carriers (33).

3. An agricultural machine as claimed in claim 2, characterized in that the second connecting element (25) comprises two telescopically slidable pipes.

4. An agricultural machine as claimed in any one of the preceding claims, characterized in that the pivotal connections (6) are constituted by pivot pins connecting the arms (10, 11) to the trestle (1), which are arranged substantially at the outmost boundaries of the trestle (1), taken in the direction of operative travel (A).

## Patentansprüche

1. Landwirtschaftliche Maschine mit Bearbeitungsgliedern (14, 15), die im normalen Betrieb durch Stützglieder (31, 32) abgestützt und an einen Dreipunkt-Anbaubock (1) mittels Armen (10, 11; 40, 41) angeschlossen sind, die durch schwenkbare Anschlüsse (6; 42, 43) mit dem Anbaubock (1) verbunden und parallel zu einer im wesentlichen horizontalen Ebene relativ zu dem Anbaubock um die Anschlüsse schwenkbar sind, um die Position der Bearbeitungsglieder (14, 15) in bezug auf den Anbaubock einzustellen, wobei die Arme (10, 11; 40, 41) ferner mittels eines ersten Verbindungselementes (22), mittels der an dem Anbaubock (1) angeordneten schwenkbaren Anschlüsse (6; 42, 43) sowie mittels der zwischen dem ersten Verbindungselement (22) und den Armen (10, 11; 40, 41) angeordneten schwenkbaren Verbindungen (23, 24), die die Eckpunkte eines Polygons mit einer momentanen Schwenkachse (37) bilden, schwenkbar miteinander verbunden sind,
dadurch gekennzeichnet, daß die Form des Polygon während des Betriebs zu verändern ist, wobei die beiden Bearbeitungsglieder (14, 15) um die momentane Schwenkachse (37), die sich in bezug auf die Arbeitsrichtung vor dem Anbaubock befindet, derart schwenkbar sind, daß sie im Betrieb beide in dieselbe Richtung relativ zu dem Anbaubock (1) seitwärts schwenken, um im Betrieb verschiedene Positionen in bezug auf den Anbaubock (1) einzunehmen, und wobei ein zweites Verbindungselement (25) vorgesehen ist, das relativ zu den Trägern (33) fest angeordnet ist und beim Einstellen des Abstandes zwischen den Bearbeitungsgliedern (14, 15) eine feste Positionierung der Laufräder (31, 32) relativ zu einer Verbindungslinie zwischen entsprechenden Punkten an aufrechten Trägern (33) der Laufräder bewirkt.

2. Landwirtschaftliche Maschine nach Anspruch 1,
dadurch gekennzeichnet, daß das zweite Verbindungselement (25) unmittelbar mit den Trägern (33) verbunden ist.

3. Landwirtschaftliche Maschine nach Anspruch 2,
dadurch gekennzeichnet, daß das zweite Verbindungselement (25) zwei verschiebbare Teleskoprohre aufweist.

4. Landwirtschaftliche Maschine nach einem der vorhergehenden Ansprüche,
dadurch gekennzeichnet, daß die schwenkbaren Anschlüsse (6) durch die Arme (10, 11) mit dem Anbaubock (1) verbindende Schwenkstifte gebildet sind, die in Arbeitsrichtung (A) gesehen im wesentlichen an den äußeren Begrenzungsflächen des Anbaubockes (1) angeordnet sind.

## Revendications

1. Machine agricole comprenant des organes de travail (14, 15) supportés par des organes de support (31, 32) au cours du fonctionnement normal, lesquels organes de travail (14, 15) sont attachés à un chevalet (1) d'attelage à trois points au moyen de bras (10, 11; 40, 41) qui sont couplés par des jonctions à pivots (6; 42, 43) au chevalet (1) et qui sont disposées de manière pivotante parallèlement à un plan sensiblement horizontal par rapport au chevalet autour desdites jonctions à pivots pour régler la position des organes de travail (14, 15) par rapport au chevalet, les bras (10, 11; 40, 41) étant en outre reliés entre eux de manière pivotante au moyen d'un premier élément de liaison (22), les jonctions à pivots (6; 42, 43) sur le chevalet (1) ainsi que les liaisons articulées (23, 24) entre ledit premier élément de liaison (22) et les bras (10, 11; 40,41) constituant les sommets d'un polygone formant un axe (37) de pivotement instantané,
**caractérisée** en ce que ledit polygone est déformable pendant le fonctionnement, les deux organes de travail (14, 15) étant pivotants autour de l'axe (37) de pivotement instantané qui est situé, en étant vu par rapport au sens de marche du travail, en avant du chevalet, de telle sorte qu'ils doivent pivoter latéralement au cours du travail dans le même sens par rapport au chevalet (1), de manière à obtenir des positions différentes par rapport au chevalet (1) au cours du travail, et un deuxième élément de liaison (25) étant prévu qui est disposé de manière rigide par rapport aux éléments porteurs (33) et qui, sous l'effet d'un réglage de la distance entre les organes de travail (14, 15), réalise une position fixe des roues de sol (31, 32) par rapport à une ligne reliant des points correspondants des éléments porteurs (33) desdites roues de sol, ces éléments porteurs (33) s'étendant vers le haut.

2. Machine agricole selon la revendication 1, caractérisée en ce que le deuxième élément de liaison (25) est relié directement aux éléments porteurs (33).

3. Machine agricole selon la revendication 2, caractérisée en ce que le deuxième élément de liaison (25) comprend deux tubes coulissants télescopiques.

4. Machine agricole selon l'une quelconque des revendications précédentes, caractérisée en ce que les articulations (6) sont constituées par des pivots reliant les bras (10, 11) au chevalet (1) qui sont disposés sensiblement sur les bords les plus extérieurs du chevalet (1), en étant vus dans le sens de marche (A) du travail.
